# EUROPEAN PATENT APPLICATION

(11) **EP 3 950 140 A1**
(43) Date of publication of application: **09.02.2022**
(21) Application number: 20885062.8
(22) Date of filing: 24.09.2020
(51) Int. Cl.: B03C 3/40, B03C 3/41, B03C 3/49, H01T 19/00, H01T 23/00

(54) **ELECTROSTATIC PRECIPITATOR**

(30) Priority: 05.11.2019 JP 2019200806
(71) Applicant: Fuji Electric Co., Ltd., Kawasaki-shi, Kanagawa 210-9530 (JP)
(72) Inventor: YAMASHIRO Keisuke, Kanagawa 210-9530 (JP)
(74) Representative: MERH-IP Matias Erny Reichl Hoffmann Patentanwälte PartG mbB
(86) International application number: PCT/JP2020/036141
(87) International publication number: WO 2021/090595

(57) **Abstract**

An electrostatic precipitator including an outer electrode of a tubular shape whose internal space is passed through by gas to be processed, and an inner electrode arranged in the internal space so as to be coaxial with the outer electrode, is provided. A ratio Ra/Rb being a ratio of an outer radius Ra of the inner electrode to an inner radius Rb of the outer electrode is smaller than 1/e (where e is a base of a natural logarithm). The ratio Ra/Rb may be smaller than 1/2e. The outer radius Ra of the inner electrode may be from 1 mm to 10 mm, and the inner radius Rb of the outer electrode may be from 10 mm to 100 mm.

## Description

### BACKGROUND

### 1. TECHNICAL FIELD

The present invention relates to an electrostatic precipitator.

### 2. RELATED ART

Conventionally, there is known an electrostatic precipitator of which electrode plate has a plurality of projections on an end face. The electrode plate is used for generating corona discharges in order to charge and collect particulate matter in gas (for example, refer to Patent Documents 1 to 3).
Patent Document 1: Japanese Patent Application Publication No. 2009-166006
Patent Document 2: Japanese Patent Application Publication No. 2012-170869
Patent Document 3: Japanese Patent Application Publication No. 2011-245429

### TECHNICAL PROBLEM

When corona discharges are generated with a plurality of projections being provided, spark discharges may be generated at some projections due to variations in distance between electrodes, potentials, or the like. Once spark discharges are generated, corona discharges cannot be formed at the plurality of projections. As a result, intermittent operations associated with the spark discharges will be repeated. When spark discharges are repeatedly generated, particulate matter accumulates on an electrode itself, thereby making it more difficult to generate a corona discharge. In an electrostatic precipitator, it is preferable to stably form a corona discharge.

### [General Disclosure]

In order to solve the above-described problem, a first aspect of the present invention provides an electrostatic precipitator having an outer electrode and an inner electrode. The outer electrode may be tubular in shape whose internal space is passed through by gas to be processed. The inner electrode may be arranged in the internal space so as to be coaxial with the outer electrode. A ratio Ra/Rb being a ratio of an outer radius Ra of the inner electrode to an inner radius Rb of the outer electrode may be smaller than 1/e (where e is a base of a natural logarithm).

The ratio Ra/Rb may also be smaller than 1/2e.

The outer radius Ra of the inner electrode may be from 1 mm to 10 mm. The inner radius Rb of the outer electrode may be from 10 mm to 100 mm.

A distance between an outer peripheral end of the inner electrode and an inner wall of the outer electrode may be 40 mm or shorter.

On a plane orthogonal to an axis of the outer electrode, a plurality of outer electrodes may be arranged in parallel. Each of the inner electrodes may be arranged in each of the internal spaces of the outer electrodes.

In a direction parallel to an axis of the outer electrode, a plurality of outer electrodes may be arranged in series. Each of the inner electrodes may be arranged in each of the internal spaces of the outer electrodes.

On a plane orthogonal to the axis of the outer electrode, a plurality of outer electrodes may be arranged in parallel. In a direction parallel to the axis of the outer electrode, a plurality of outer electrodes may be arranged in series. Each of the inner electrodes may be arranged in each of the internal spaces of the outer electrodes.

Gas to be processed which has passed through the internal space of the outer electrode that is arranged on an upstream side is introduced into the internal space of the outer electrode that is arranged on a downstream side. An inner radius of the outer electrode arranged on the downstream side may be smaller than an inner radius of the outer electrode arranged on the upstream side.

The number of the outer electrodes being arranged in parallel in the downstream side may be more than the number of the outer electrodes being arranged in parallel in the upstream side.

Each of the outer electrodes may be provided with a through hole. The electrostatic precipitator may include a collection electrode that is arranged so as to surround the plurality of outer electrodes being arranged in parallel.

The inner electrode may be longer than the outer electrode in an axial direction. An end of the inner electrode may be fixed outside the outer electrode.

The electrostatic precipitator may include a container for containing the end of the inner electrode. The electrostatic precipitator may include a gas introducing portion for introducing gas to be processed into the internal space of the outer electrode. The gas introducing portion may be arranged between the container and the outer electrode. The inner electrode may be provided from the internal space of the outer electrode to the container through the gas introducing portion.

The electrostatic precipitator may include an atmospheric pressure maintaining portion for maintaining atmospheric pressure in the container higher than atmospheric pressure in the gas introducing portion.

The electrostatic precipitator may also include a combusting portion. Particles included in gas to be processed may be charged by virtue of a potential difference between a potential of the inner electrode and a potential of the outer electrode. The combusting portion may cause the particles that are charged by virtue of the potential difference between the potential of the inner electrode and the potential of the outer electrode to be combusted.

The combusting portion may be on an inner wall surface of the collection electrode.

There may be a collection space between the collection electrode and the outer electrode. The combusting portion may have an electrode for generating a microwave in the collection space.

The combusting portion may control a wavelength of the microwave in the collection space so that the microwave forms a standing wave.

The combusting portion may be arranged so as to surround the plurality of outer electrodes being arranged in parallel.

A second aspect of the present invention provides an electrostatic precipitator including a plurality of outer electrodes, a plurality of inner electrodes, and a collection electrode. Each of the outer electrodes may be tubular in shape whose internal space is passed through by gas to be processed. Each of the inner electrodes may be arranged in each of the internal spaces of the outer electrodes so as to be coaxial with each of the outer electrodes. On a plane orthogonal to an axis of an outer electrode, a plurality of outer electrodes may be arranged in parallel. Each of the outer electrodes may be provided with a through hole. The collection electrode may be arranged so as to surround the plurality of outer electrodes being arranged in parallel.

The summary clause does not necessarily describe all necessary features of the embodiments of the present invention. The present invention may also be a subcombination of the features described above.

### BRIEF DESCRIPTION OF THE DRAWINGS

FIG. 1 is a block diagram showing a configuration example of an electrostatic precipitator 100 according to one embodiment of the present invention.
FIG. 2 shows one example of a cross section X-Y of the electrostatic precipitator 100.
FIG. 3 shows one example of a relationship between a product of a distance d and a pressure p of gas to be processed, and a spark voltage Vs.
FIG. 4 shows one example of an electrostatic precipitator 200.
FIG. 5 shows one example of a cross section X-Y of the electrostatic precipitator 200 shown in FIG. 4.
FIG. 6 shows another example of the cross section X-Y of the electrostatic precipitator 200 shown in FIG. 4.
FIG. 7 shows one example of an electrostatic precipitator 300.
FIG. 8 shows one example of an electrostatic precipitator 400.
FIG. 9 shows another example of the electrostatic precipitator 400.
FIG. 10 shows one example of an electrostatic precipitator 500.

### DESCRIPTION OF EXEMPLARY EMBODIMENTS

Hereinafter, the present invention will be described through embodiments of the invention. However, the following embodiments do not limit the invention defined in the claims. Some combinations of features described in the embodiments may be unnecessary for solving means of the invention.

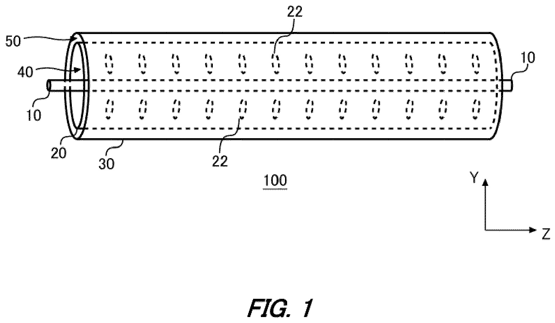

FIG. 1 is a block diagram showing a configuration example of an electrostatic precipitator 100 according to one embodiment of the present invention. The electrostatic precipitator 100 charges and collects particles of dust or the like included in gas to be processed. The gas to be processed is, for example but not limited to, exhaust gas exhausted from an engine of a ship or the like. The electrostatic precipitator 100 may be used in combination with a scrubber apparatus for removing particles in dust or the like by spraying liquid onto the gas to be processed. By way of example, after an electrostatic precipitator 100 removes particles in the gas to be processed, the scrubber apparatus may remove more particles in the gas to be processed. Alternatively, after the scrubber apparatus removes particles in the gas to be processed, the electrostatic precipitator 100 may remove more particles in the gas to be processed.

The electrostatic precipitator 100 includes an outer electrode 20 and an inner electrode 10. The outer electrode 20 is a tubular metal electrode having an internal space 40. That is, the outer electrode 20 is in a bar shape of which longitudinal direction is in a predetermined direction (Z axis direction in FIG. 1). The internal space 40 is inside this bar shape. The outer electrode 20 of the present example is in a cylindrical shape.

The internal space 40 is connected to external space at both ends of the outer electrode 20 in the Z axis direction. At an end in the Z axis direction, gas to be processed is introduced into the internal space 40. As used herein, the Z axis direction is the longitudinal direction of the outer electrode 20, and X axis and Y axis are two orthogonal axes which are perpendicular to the Z axis. The outer electrode 20 of the present example surrounds the internal space 40 with a metal electrode of a board shape.

The gas to be processed passes through the internal space 40. In the present example, the gas to be processed passes through the internal space 40 along the Z axis direction. The electrostatic precipitator 100 collects particles included in the gas to be processed which passes through.

The inner electrode 10 is a metal electrode arranged in the internal space 40 so as to be coaxial with the outer electrode 20. That is, the inner electrode 10 is arranged at a center of the internal space 40 in an X-Y plane perpendicular to the Z axis direction. The center of the internal space 40 may be a geometric center of mass of the internal space 40 in the X-Y plane. When the internal space 40 is in a circular shape in the X-Y plane, the center of this circle is the center of the internal space 40. The inner electrode 10 is in a straight-line shape being parallel to the Z axis direction. Preferably, the inner electrode 10 is in a circular shape in the X-Y plane. The inner electrode 10 may be hollow or may not be hollow. A distance between the inner electrode 10 and the outer electrode 20 in the X-Y plane is entirely even along the Z axis direction.

A reference potential is applied to the outer electrode 20. The reference potential is a ground potential, for example. A predetermined high potential that is higher than a potential of the outer electrode 20 is applied to the inner electrode 10. By applying a predetermined potential to each electrode, a corona discharge is generated in the internal space 40 between the inner electrode 10 and the outer electrode 20 by virtue of a potential difference between a potential of the inner electrode 10 and a potential of the outer electrode 20. In this manner, particles included in the gas to be processed, which passes through the internal space 40, can be charged.

The electrostatic precipitator 100 utilizes Coulomb force or the like in order to collect the charged particles in a predetermined region. The electrostatic precipitator 100 of the present example collects the charged particles in a region outside the outer electrode 20. The electrostatic precipitator 100 of the present example also includes a collection electrode 30. The collection electrode 30 is a tubular metal electrode of which longitudinal direction is in the Z axis direction, and arranged so as to surround the outer electrode 20. The collection electrode 30 and the outer electrode 20 may have the same length in the Z axis direction. A potential lower than that of the inner electrode 10 is applied to the collection electrode 30. The same potential as that of the outer electrode 20 may be applied to the collection electrode 30.

A collection space 50 is provided between the collection electrode 30 and the outer electrode 20. The board-shaped metal electrode of the outer electrode 20 is provided with a plurality of through holes 22. The through holes 22 connect the internal space 40 and the collection space 50.

Charged particles that exist in the internal space 40 move in a direction from the inner electrode 10 to the outer electrode 20 by means of Coulomb force, and ionic wind generated by a corona discharge. The charged particles are collected in the collection space 50 through the through holes 22. Arrangement of the collection space 50 is not limited to that of the present example. The collection space 50 may be arranged further downstream than the outer electrode 20. That is, the charged particles included in the gas to be processed that has passed through the internal space 40 may be collected further downstream than the outer electrode 20.

According to the electrostatic precipitator 100 of the present example, instead of providing an electrode with a plurality of projections, the inner electrode 10 of a columnar shape and the outer electrode 20 of a cylindrical shape are coaxially arranged. Therefore, an electric field can be prevented from concentrating at a specific position, thereby preventing a spark discharge. In the electrostatic precipitator 100, the gas to be processed may have a high temperature. By way of example, the gas to be processed may be maximum of 400°C when introduced into an electrostatic precipitator 100 for a ship. Even when there is a large change in temperature, by having a cylindrical structure of which axis is shared, a distance between the inner electrode 10 and the outer electrode 20 can be prevented from being uneven. In this way, a spark discharge can be prevented.

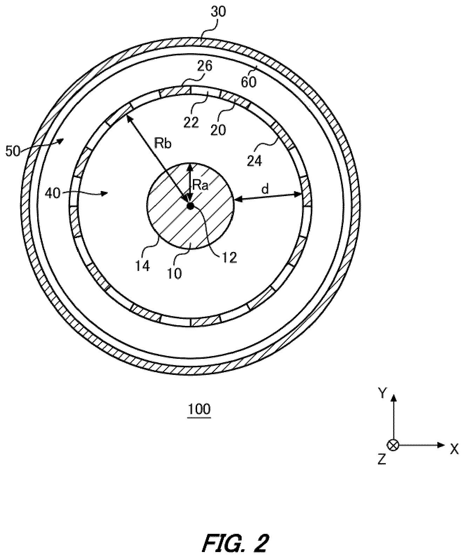

FIG. 2 shows one example of a cross section X-Y of the electrostatic precipitator 100. In FIG. 2, the inner electrode 10, the outer electrode 20, and the collection electrode 30 are hatched with oblique lines. Hatching of these electrodes may be omitted in other drawings.

The inner electrode 10 is arranged at a center 12 of the internal space 40 in the X-Y plane. That is, in the X-Y plane, the center 12 of the internal space 40 and the inner electrode 10 overlap. In the X-Y plane, it is preferable that a center of the inner electrode 10 matches the center 12 of the internal space 40.

As shown in FIG. 2, an outer radius of the inner electrode 10 is Ra. The outer radius of the inner electrode 10 is a radius of the inner electrode 10 in the X-Y plane. That is, the outer radius of the inner electrode 10 is a distance between the center of the inner electrode 10 and an outer peripheral end 14 of the inner electrode 10. The outer peripheral end 14 is an end of the inner electrode 10 that is in direct contact with the internal space 40. The outer peripheral end 14 of the inner electrode 10 of the present example is a circle being formed along an outer circumference of the inner electrode 10.

As shown in FIG. 2, an inner radius of the outer electrode 20 is Rb. The inner radius of the outer electrode 20 is a radius of an inner wall 24 of the outer electrode 20 in the X-Y plane. That is, the inner radius of the outer electrode 20 is a distance between the center 12 and the inner wall 24 of the outer electrode 20. The outer electrode 20 of the present example has the inner wall 24 that is in direct contact with the internal space 40, and an outer wall 26 that is in direct contact with the collection space 50. The through hole 22 of the outer electrode 20 penetrates the outer electrode 20 from the inner wall 24 to the outer wall 26.

A ratio Ra/Rb being a ratio of the outer radius Ra of the inner electrode 10 to the inner radius Rb of the outer electrode 20 is smaller than 1/e. Here, e is a base of a natural logarithm and e = 2.71828. Therefore, a corona discharge can be stably formed in the internal space 40.

It is known that tubular electrodes being coaxially arranged show the best insulation efficiency when the above-mentioned ratio Ra/Rb is equal to 1/e (for example, refer to the literature "Koudenatsu Kougaku (High Voltage Engineering)", Asakura Publishing, written by Kono, Teruya, pp. 28-29). For example, it is preferable for cables or the like being coaxially arranged to have high insulation between an inner wiring and an outer shield. Therefore, it is preferable to design so that the ratio Ra/Rb becomes equal to 1/e.

When the ratio Ra/Rb is equal to 1/e, electric field strength distribution is likely to be uniform from the inner electrode 10 to the outer electrode 20. Such a state is referred to as a quasi-uniform profile. In an electric field having the quasi-uniform profile, dielectric breakdown is unlikely to occur. However, if the dielectric breakdown occurs, a spark discharge is generated in no time, which makes it impossible to generate a corona discharge.

When the ratio Ra/Rb is smaller than 1/e, electric fields are concentrated near the inner electrode 10, and an electric field strength distribution from the inner electrode 10 to the outer electrode 20 becomes non-uniform. Such a state is referred to as a non-uniform profile. In an electric field having the non-uniform profile, since electric fields are concentrated near the inner electrode 10, a corona discharge is easily generated.

In the electrostatic precipitator 100 of the present example, a corona discharge is easily and uniformly generated in the entire internal space 40 surrounding 360 degrees of the inner electrode 10 in the X-Y plane. Also, a corona discharge is easily and uniformly generated in the entire internal space 40 in the Z axis direction. In this manner, particles included in gas to be processed, which passes through the internal space 40, can be efficiently charged. In contrast, in a manner in which a corona discharge is generated by providing projections on a plate electrode, electric field strength changes depending on a distance from the projections. Therefore, it may be difficult to charge particles that pass through a region away from the projections, such as a region in the middle of two projections.

The smaller the ratio Ra/Rb is than 1/e, the more stable a corona discharge can be generated. The ratio Ra/Rb may be smaller than 1/(2e). The ratio Ra/Rb may be smaller than 1/(5e), and may also be smaller than 1/(10e).

By way of example, the outer radius Ra of the inner electrode 10 is from 1 mm to 10 mm. The outer radius Ra of the inner electrode 10 may be 5 mm or shorter. The inner radius Rb of the outer electrode 20 is from 10 mm to 100 mm. The inner radius Rb of the outer electrode 20 may be 50 mm or longer.

A distance d between the outer peripheral end 14 of the inner electrode 10 and the inner wall 24 of the outer electrode 20 may be 40 mm or shorter. The distance d corresponds to a difference Rb - Ra being a difference between the inner radius Rb and the outer radius Ra. If the distance d becomes too large, an electric field near the outer electrode 20 becomes weak, which makes it difficult to charge particles that pass through near the outer electrode 20. By making the distance d 40 mm or shorter, sufficient electric field strength can be ensured in the entire internal space 40. This facilitates charging every particle that passes through the internal space 40.

The smaller the outer radius Ra of the inner electrode 10 is, the more stable a corona discharge can be generated in the internal space 40. Meanwhile, it is preferable to maintain the distance d constant in the entire direction along the Z axis. Therefore, the inner electrode 10 may be formed of material having certain hardness which facilitates maintaining the distance d constant even when the inner electrode 10 is formed thin. Preferably, the inner electrode 10 is formed of material that exhibits stability under high temperature. For example, the inner electrode 10 is formed of SB material (carbon steel and molybdenum steel for boilers and pressure vessels). In order to prevent the distance d from being uneven due to warpage of the inner electrode 10, the electrostatic precipitator 100 may have a pulling portion for pulling both ends of the inner electrode 10 outward. Also, the electrostatic precipitator 100 may have a support member that is provided between the inner electrode 10 and the outer electrode 20 and maintains the distance d constant. The support member may be arranged along the Z axis direction at certain intervals in the internal space 40. The support member is formed of insulating material.

The electrostatic precipitator 100 of the present example also includes, in addition to the configuration shown in FIG. 1, a combusting portion 60 for causing charged particle to be combusted. The combusting portion 60 is, for example, a heater. The combusting portion 60 may be provided on an inner wall surface of the collection electrode 30. The inner wall surface of the collection electrode 30 is a part of a wall surface of the collection electrode 30 which faces the outer electrode 20. In another example, a combusting portion 60 may have an electrode for generating a microwave in a collection space 50. The combusting portion 60 may control a wavelength of the microwave in the collection space 50 so that the microwave forms a standing wave. In response to the microwave forming the standing wave, energy is concentrated at a peak of the standing wave, thereby causing particles to be easily combusted. By causing the charged particles to be combusted, the collection space 50 can be prevented from being filled up with the charged particles.

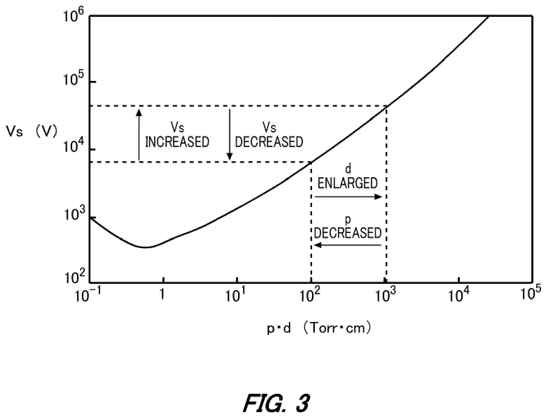

FIG. 3 shows one example of a relationship between a product of a distance d and a pressure p of gas to be processed, and a spark voltage Vs. The spark voltage Vs is a voltage at which a spark discharge is generated due to dielectric breakdown. Empirically, the spark voltage Vs is known to be expressed by a function of a product pd being a product of the distance d and the pressure p (Paschen's law).

When a temperature of the gas to be processed is higher than a room temperature, gas density (i.e., the pressure p) thereof decreases compared to an equivalent volume of gas at the room temperature. As shown in FIG. 3, when the pressure p decreases, the spark voltage Vs also decreases. On the other hand, the spark voltage Vs can be increased by enlarging the distance d. Therefore, in the electrostatic precipitator 100 for processing high temperature gas to be processed, it is preferable that the distance d is a predetermined value or longer so that the spark voltage Vs is prevent from being too low depending on a temperature of the gas to be processed.

Considered below is a condition for maintaining, when a corona discharge is stably formed under such a condition that gas to be processed is at a room temperature (20°C) and the distance d is 15 mm, the same or better state under such a condition that gas to be processed is at 400°C. When the gas to be processed is 400°C, an equivalent pressure thereof is (273.15 + 20)/(400 + 273.15) = 0.44 atm. In this case, if the distance d is 15 mm/0.44 = 34.1 mm or longer, a corona discharge can be stably formed. In the electrostatic precipitator 100, the distance d may be set to 34.1 mm or longer.

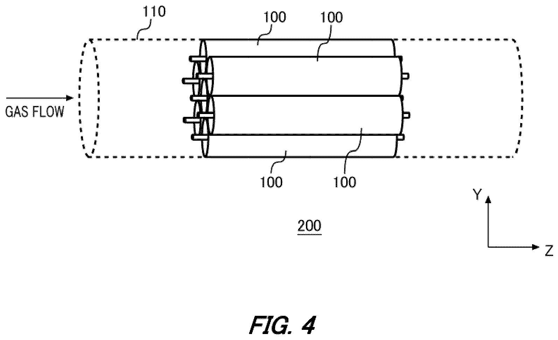

FIG. 4 shows one example of an electrostatic precipitator 200. The electrostatic precipitator 200 includes a plurality of the electrostatic precipitators 100 of any aspects described from FIG. 1 to FIG. 3. The plurality of electrostatic precipitators 100 is arranged in parallel in an X-Y plane perpendicular to an axis of each outer electrode 20 (i.e., a Z axis that passes through a center 12 shown in FIG. 2). That is, internal spaces 40 are respectively arranged at different positions in the X-Y plane. Each electrostatic precipitator 100 is introduced with gas to be processed side by side. Gas to be processed that has passed through one electrostatic precipitator 100 will not be introduced into another electrostatic precipitator 100.

Each electrostatic precipitator 100 includes the inner electrode 10 and the outer electrode 20 described from FIG. 1 to FIG. 3. Each electrostatic precipitator 100 may include a collection electrode 30, or may not include the collection electrode 30. Each electrostatic precipitator 100 may include a combusting portion 60, or may not include the combusting portion 60. A plurality of outer electrode 20 is arranged in parallel in the X-Y plane. Each of the inner electrodes 10 is arranged in each of the internal spaces 40 of the outer electrodes 20.

As described in the present example, by providing a plurality of electrostatic precipitators 100 in parallel, an amount of gas to be processed can be increased. The number of electrostatic precipitators 100 to be provided in parallel is easily scalable. When an internal space 40 of one electrostatic precipitator 100 has a cross-sectional area smaller than a cross-sectional area of a gas introducing portion 110 in which gas to be processed is introduced, pressure loss is caused upon introducing the gas to be processed into the electrostatic precipitator 100. The gas introducing portion 110 is, for example, a duct through which the gas to be processed flows. The electrostatic precipitator 100 may be arranged inside the gas introducing portion 110. By providing a plurality of electrostatic precipitators 100 in parallel, the sum of cross-sectional areas of internal spaces 40 becomes closer to a cross-sectional area of the duct. Therefore, pressure loss can be prevented. The electrostatic precipitators 100 may be most densely arranged in the X-Y plane so that the number of electrostatic precipitators 100 to be arranged inside the gas introducing portion 110 becomes maximum.

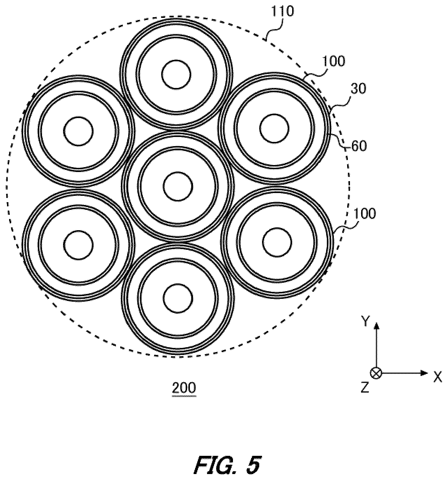

FIG. 5 shows one example of a cross section X-Y of the electrostatic precipitator 200 shown in FIG. 4. In the present example, each electrostatic precipitator 100 has a collection electrode 30 and a combusting portion 60. In each electrostatic precipitator 100, particles can be collected and combusted.

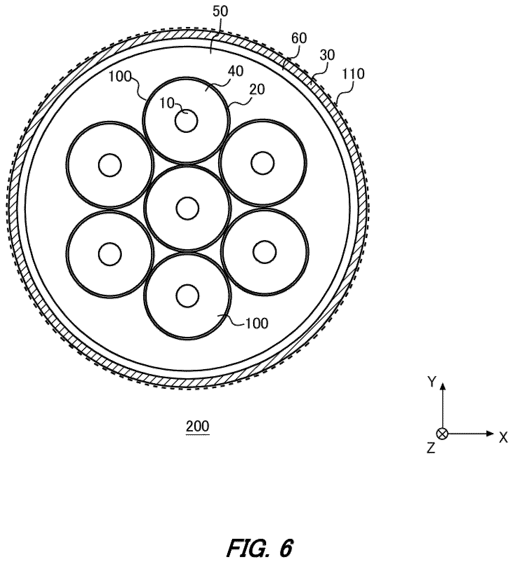

FIG. 6 shows another example of the cross section X-Y of the electrostatic precipitator 200 shown in FIG. 4. In the present example, each electrostatic precipitator 100 has an inner electrode 10 and an outer electrode 20, but does not have a collection electrode 30 nor a combusting portion 60.

The electrostatic precipitator 200 of the present example includes a collection electrode 30 that is arranged so as to surround a plurality of outer electrodes 20 being arranged in parallel. That is, the plurality of outer electrodes 20 is arranged in a region surrounded by one collection electrode 30. An outer radius of the collection electrode 30 may be substantially the same as an inner radius of a gas introducing portion 110. The electrostatic precipitator 200 may include a combusting portion 60 that is arranged so as to surround the plurality of outer electrodes 20 being arranged in parallel. The combusting portion 60 may be a heater that is provided on an inner wall surface of the collection electrode 30. According to the present example, the plurality of electrostatic precipitators 100 may share the collection electrode 30 and the combusting portion 60.

Each of the outer electrodes 20 is provided with a through hole 22 shown in FIG. 2 or the like. The outer electrodes 20 may be welded to each other. Filling material may fill between outer electrodes 20 so that there is no gap between the outer electrodes 20. The filling material may be conductive material such as metal, or may also be insulating material such as resin.

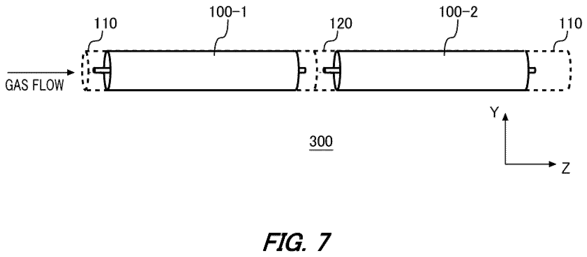

FIG. 7 shows one example of an electrostatic precipitator 300. The electrostatic precipitator 300 includes a plurality of the electrostatic precipitators 100 of any aspects described from FIG. 1 to FIG. 3. The plurality of electrostatic precipitators 100 is arranged in series in a direction parallel to an axis of each outer electrode 20. That is, internal spaces 40 are respectively arranged at different positions in a Z axis direction. At least a part of gas to be processed which has passed through one electrostatic precipitator 100 that is arranged on an upstream side is introduced into one electrostatic precipitator 100 that is arranged on a downstream side. As used herein, a side from which the gas to be processed flows first is referred to as an upstream side, and a side to which the gas to be processed flows next is referred to as a downstream side.

Each electrostatic precipitator 100 may be connected by a connector 120. The connector 120 introduces the gas to be processed which has passed through the upstream electrostatic precipitator 100 into the downstream electrostatic precipitator 100. The connector 120 is, for example, a duct.

Each electrostatic precipitator 100 includes the inner electrode 10 and the outer electrode 20 described from FIG. 1 to FIG. 3. Each electrostatic precipitator 100 may include a collection electrode 30, or may not include the collection electrode 30. Each electrostatic precipitator 100 may include a combusting portion 60, or may not include the combusting portion 60. A plurality of outer electrodes 20 is arranged in series in a Z axis direction. Each of the inner electrodes 10 is arranged in each of the internal spaces 40 of the outer electrodes 20.

As described in the present example, by providing the plurality of electrostatic precipitators 100 in series, a length of the internal space 40 through which gas to be processed passes can be increased. The number of electrostatic precipitators 100 to be provided in series is easily scalable. Therefore, a dust collection rate in the electrostatic precipitator 300 can be easily improved. An outer radius Ra of an inner electrode 10 and an inner radius Rb of an outer electrode 20 in an upstream electrostatic precipitator 100-1 may be the same as an outer radius Ra of an inner electrode 10 and an inner radius Rb of an outer electrode 20 in the downstream electrostatic precipitator 100-2, or may be different, respectively.

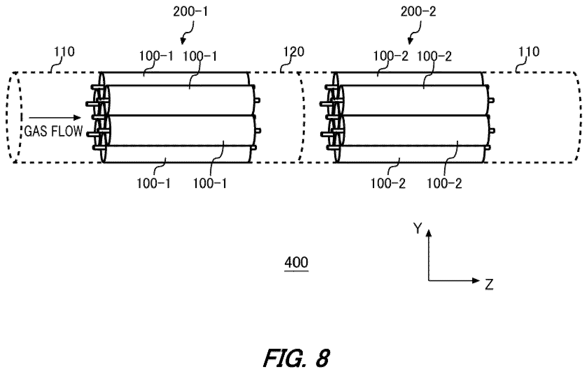

FIG. 8 shows one example of an electrostatic precipitator 400. The electrostatic precipitator 400 includes a plurality of the electrostatic precipitators 200 of any aspects described from FIG. 4 to FIG. 6, which are arranged in series. Such a configuration can achieve both of reduction in pressure loss and improvement of a dust collection rate.

Each electrostatic precipitator 200 may be connected by a connector 120. The connector 120 introduces gas to be processed which has passed through an upstream electrostatic precipitator 200 into a downstream electrostatic precipitator 200. The connector 120 is, for example, a duct. The connector 120 of the present example may be provided so as to be shared by a plurality of electrostatic precipitators 100 in the electrostatic precipitator 200. That is, the connector 120 collectively introduces gas to be processed which has passed through each electrostatic precipitator 100 of an upstream electrostatic precipitator 200-1 into a downstream electrostatic precipitator 200-2. An outer radius Ra of an inner electrode 10 and an inner radius Rb of an outer electrode 20 in each electrostatic precipitator 100-1 included in the upstream electrostatic precipitator 200-1 may be the same as an outer radius Ra of an inner electrode 10 and an inner radius Rb of an outer electrode 20 in each electrostatic precipitator 100-2 included in the downstream electrostatic precipitator 200-2, or may be different, respectively. The number of electrostatic precipitators 100-1 included in the upstream electrostatic precipitator 200-1 may be the same as the number of electrostatic precipitators 100-2 included in the downstream electrostatic precipitator 200-2, or may be different.

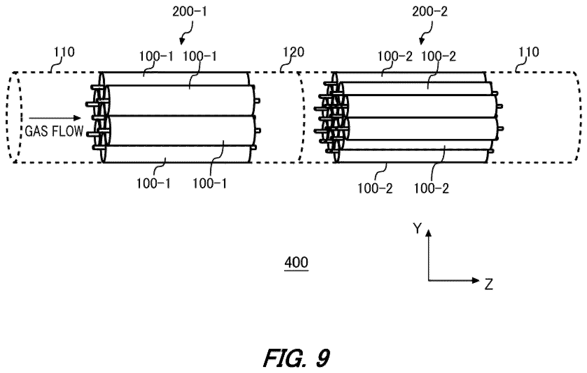

FIG. 9 shows another example of the electrostatic precipitator 400. In the present example, an inner radius Rb of an outer electrode 20 of a downstream electrostatic precipitator 100-2 is smaller than an inner radius Rb of an outer electrode 20 of an upstream electrostatic precipitator 100-1. An outer radius Ra of a downstream inner electrode 10 may be the same as an outer radius Ra of an upstream inner electrode 10. That is, a distance d between electrodes in the downstream electrostatic precipitator 100-2 is smaller than a distance d between electrodes in the upstream electrostatic precipitator 100-1.

As mentioned above, it is preferable that the distance d between the electrodes is a certain value or longer so that a spark voltage does not become below a predetermined reference voltage even when gas to be processed has high temperature. Note that, gas to be processed which is introduced into the downstream electrostatic precipitator 200-2 often has less temperature than gas to be processed which is introduced into the upstream electrostatic precipitator 200-1. Therefore, in the downstream electrostatic precipitator 200-1, even if the distance d between the electrodes is relatively small, the spark voltage can be maintained at the reference voltage or higher. Note that, whereas the electrostatic precipitators 200 are arranged close to each other in series in FIG. 9, two electrostatic precipitators 200 may be arranged apart from each other to the extent that there is be a temperature difference. There may be arranged between two electrostatic precipitators 200, an apparatus for removing particles in gas to be processed by spraying liquid, or an apparatus for removing particles in the gas to be processed by means of a filter.

The number of electrostatic precipitators 100 included in the downstream electrostatic precipitator 200-2 may be more than the number of electrostatic precipitators 100 included in the upstream electrostatic precipitator 200-1. That is, the number of outer electrodes 20 arranged in parallel in the electrostatic precipitator 200-2 may be more than the number of outer electrodes 20 arranged in parallel in the electrostatic precipitator 200-1. Therefore, internal spaces 40 in the electrostatic precipitator 200-2 can be arranged at higher density.

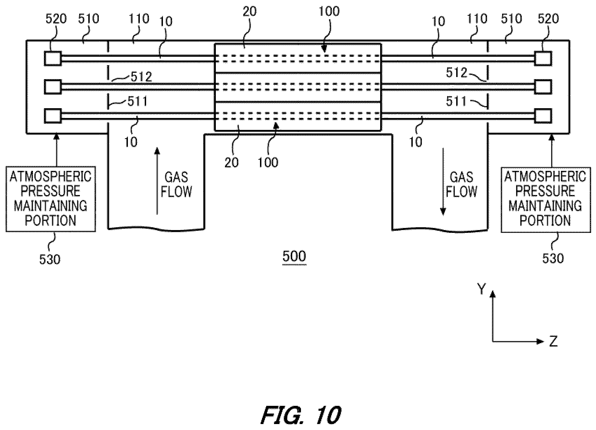

FIG. 10 shows one example of an electrostatic precipitator 500. The electrostatic precipitator 500 of the present example includes at least one electrostatic precipitator 100. The electrostatic precipitator 500 may include an electrostatic precipitator 100, an electrostatic precipitator 200, an electrostatic precipitator 300, or an electrostatic precipitator 400 of any aspects described from FIG. 1 to FIG. 9. In addition, the electrostatic precipitator 500 of the present example includes a gas introducing portion 110, a container 510, a fixing portion 520, and an atmospheric pressure maintaining portion 530.

The gas introducing portion 110 introduces gas to be processed into an internal space 40 of the electrostatic precipitator 100. The gas introducing portion 110 is, for example, a duct.

An inner electrode 10 of each electrostatic precipitator 100 is longer than an outer electrode 20 in a Z axis direction. That is, both ends of the inner electrode 10 in the Z axis direction are arranged outside the outer electrode 20. The both ends of the inner electrode 10 of the present example are contained in a container 510. The container 510 of the present example separates space adjacent to the gas introducing portion 110 from another region by a wall.

A part of the gas introducing portion 110 is arranged between the electrostatic precipitator 100 and the container 510 in the Z axis direction. The inner electrode 10 is provided from the internal space 40 of the electrostatic precipitator 100 to the container 510 through the gas introducing portion 110. The inner electrode 10 may extend from the internal space 40 to the container 510 in the Z axis direction. A part of the inner electrode 10, which is arranged outside the outer electrode 20, may be coated with insulating material. A wall 511 that is provided at a boundary between the gas introducing portion 110 and the container 510 is provided with a through hole 512 through which the inner electrode 10 passes.

The both ends of the inner electrode 10 are fixed inside the container 510 by means of a fixing portion 520. The fixing portion 520 is formed of insulating material and may have an insulator for supporting an end of the inner electrode 10. The container 510 may be provided with a voltage applying portion for applying voltage to the inner electrode 10.

An atmospheric pressure maintaining portion 530 maintains atmospheric pressure in the container 510 higher than atmospheric pressure in the gas introducing portion 110. The atmospheric pressure maintaining portion 530 may introduce inert gas such as nitrogen, or may introduce air into the container 510. By maintaining high atmospheric pressure in the container 510, gas to be processed can be prevented from flowing into the container 510 through the through hole 512. Therefore, particles in the gas to be processed are prevented from being attached to the fixing portion 520 or the like, thereby facilitating maintenance of the electrostatic precipitator 500.

While the embodiments of the present invention have been described, the technical scope of the present invention is not limited to the above described embodiments. It is apparent to persons skilled in the art that various alterations and improvements can be added to the above described embodiments. It is also apparent from the scope of the claims that the embodiments added with such alterations or improvements can be included in the technical scope of the present invention.

### EXPLANATION OF REFERENCES

10: inner electrode; 12: center; 14: outer peripheral end; 20: outer electrode; 22: through hole; 24: inner wall; 26: outer wall; 30: collection electrode; 40: internal space; 50: collection space; 60: combusting portion; 100, 200, 300, 400, 500: electrostatic precipitator; 110: gas introducing portion; 120: connector; 510: container; 511: wall; 512: through hole; 520: fixing portion; 530: atmospheric pressure maintaining portion

## Claims

1. An electrostatic precipitator, comprising:
an outer electrode of a tubular shape whose internal space is passed through by gas to be processed; and
an inner electrode arranged in the internal space so as to be coaxial with the outer electrode, wherein
a ratio Ra/Rb being a ratio of an outer radius Ra of the inner electrode to an inner radius Rb of the outer electrode is smaller than 1/e (where e is a base of a natural logarithm).

2. The electrostatic precipitator according to claim 1, wherein the ratio Ra/Rb is smaller than 1/2e.

3. The electrostatic precipitator according to claim 1 or 2, wherein
the outer radius Ra of the inner electrode is from 1 mm to 10 mm, and
the inner radius Rb of the outer electrode is from 10 mm to 100 mm.

4. The electrostatic precipitator according to any one of claims 1 to 3, wherein a distance between an outer peripheral end of the inner electrode and an inner wall of the outer electrode is 40 mm or shorter.

5. The electrostatic precipitator according to any one of claims 1 to 4, wherein
on a plane orthogonal to an axis of the outer electrode, a plurality of the outer electrodes is arranged in parallel, and
each of a plurality of the inner electrodes is arranged in each of a plurality of the internal spaces of the plurality of outer electrodes.

6. The electrostatic precipitator according to any one of claims 1 to 4, wherein
in a direction parallel to an axis of the outer electrode, a plurality of the outer electrodes is arranged in series, and
each of a plurality of the inner electrodes is arranged in each of a plurality of the internal spaces of the plurality of outer electrodes.

7. The electrostatic precipitator according to any one of claims 1 to 4, wherein
on a plane orthogonal to an axis of the outer electrode, a plurality of the outer electrodes is arranged in parallel,
in a direction parallel to an axis of the outer electrode, a plurality of the outer electrodes is arranged in series, and
each of a plurality of the inner electrodes is arranged in each of a plurality of the internal spaces of the pluralities of outer electrodes.

8. The electrostatic precipitator according to claim 7, wherein
the gas to be processed which has passed through the internal space of the outer electrode arranged on an upstream side is introduced into the internal space of the outer electrode arranged on a downstream side, and
an inner radius of the outer electrode arranged on the downstream side is smaller than an inner radius of the outer electrode arranged on the upstream side.

9. The electrostatic precipitator according to claim 8, wherein a number of the plurality of outer electrodes arranged in parallel on the downstream side is more than a number of the plurality of outer electrodes arranged in parallel on the upstream side.

10. The electrostatic precipitator according to claim 5 or 7, wherein each of the plurality of outer electrodes is provided with a through hole, further comprising:
a collection electrode arranged so as to surround the plurality of outer electrodes being arranged in parallel.

11. The electrostatic precipitator according to any one of claims 1 to 10, wherein
the inner electrode is longer than the outer electrode in an axial direction, and
an end of the inner electrode is fixed outside the outer electrode.

12. The electrostatic precipitator according to claim 11, further comprising:
a container in which an end of the inner electrode is contained; and
a gas introducing portion for introducing the gas to be processed into the internal space of the outer electrode, wherein
the gas introducing portion is arranged between the container and the outer electrode, and
the inner electrode is provided from the internal space of the outer electrode to the container through the gas introducing portion.

13. The electrostatic precipitator according to claim 12, further comprising an atmospheric pressure maintaining portion for maintaining atmospheric pressure in the container higher than atmospheric pressure in the gas introducing portion.

14. An electrostatic precipitator, comprising:
a plurality of outer electrodes of a tubular shape whose internal space is passed through by gas to be processed;
a plurality of inner electrodes, each of which is arranged in each of a plurality of the internal spaces of the plurality of outer electrodes so as to be coaxial with each of the plurality of outer electrodes; and
one collection electrode, wherein
the plurality of outer electrodes is arranged in parallel on a plane orthogonal to axes of the plurality of outer electrodes,
each of the plurality of outer electrodes is provided with a through hole, and
the one collection electrode is arranged so as to surround the plurality of outer electrodes arranged in parallel.
